# EUROPÄISCHE PATENTSCHRIFT

(11) **EP 0 816 692 B1**
(45) Veröffentlichungstag und Bekanntmachung des Hinweises auf die Patenterteilung: **27.03.2002**
(21) Anmeldenummer: 97109432.1
(22) Anmeldetag: 11.06.1997
(51) Int. Cl.: F16B 31/04

(54) **Befestigungselement für nichtruhende Belastungen**
Fixing element for dynamic forces
Elément de fixation pour charges dynamiques

(30) Priorität: 24.06.1996 DE 19625176
(43) Veröffentlichungstag der Anmeldung: 07.01.1998
(73) Patentinhaber: UPAT GMBH & CO, 79312 Emmendingen (DE)
(72) Erfinder: Frischmann, Albert, 79341 Kenzingen (DE); Mauz, Joachim, 79312 Emmendingen (DE)

(56) Entgegenhaltungen:
- DE-A- 3 331 097
- US-A- 4 906 154

## Beschreibung

Die Erfindung betrifft ein Befestigungselement für nichtruhende Belastungen zum Befestigen von Maschinen, Fördereinrichtungen oder sonstigen Bauteilen gemäß der Gattung des Anspruches 1.

Befestigungselemente werden für nichtruhende, dynamische Lasten beispielsweise zum Befestigen von Maschinen, Födereinrichtungen oder sonstigen Bauteilen benötigt, um die hohen, dynamischen manchmal auch schockartigen Lasten aufzunehmen. Die bekannten, für diese Anwendung vorgesehenen Befestigungselemente sind meist nach dem Setzen im Befestigunguntergrund in axialer Richtung vorgespannt, um die starken dynamischen Kräfte, die auf die Befestigung einwirken, in den Befestigungsuntergrund abzuleiten. Die Praxis zeigt, daß die aufgebrachte Vorspannung durch die auftretenden dynamischen Belastungen in kurzer Zeit stark reduziert wird. Um diesen Abbau der Vorspannkraft zu unterbinden, ist in der DE-OS 3 331 097 ein Dübel bzw. Befestigungselement der eingangs genannten Art vorgeschlagen, der mit einem zwischen dem Gegenlager am Bolzen und dem zu befestigenden Gegenstand angeordneten Energiespeicher in Form eines Federelementes versehen ist.

Das Federelement weist eine von der zulässigen Gebrauchslast abhängige Spannkraft auf und ist außerhalb des Bohrlochs angeordnet. Als nachteilig hat sich gezeigt, daß bei hohen Lastwechselzahlen große Flächenpressungen zwischen den einzelnen Federn auftreten, die zur Beschädigung der Federfläche durch Reibkorrosion führen. Als Folge dessen tritt eine rapide Reduzierung der Vorspannkraft auf, die einen Schlupf des Dübels verursacht und zum Versagen der Befestigung führen kann. Ferner nimmt auch die Elastizität des Energiespeichers ab, so daß die Fähigkeit zur Aufnahme dynamischer Lasten verloren geht.

Des weiteren ist die Anordnung des Federelementes auf der Außenfläche des zu befestigenden Gegenstandes aus Platzgründen nicht in allen Fällen möglich.

Ausgehend vom diesem Stand der Technik liegt der Erfindung die Aufgabe zugrunde, ein Befestigungselement für dynamisch belastbare Befestigungen zu schaffen, das eine konstante Erhaltung der Spannkraft sowie eine platzsparende Befestigung ermöglicht.

Die Lösung dieser Aufgabe wird durch die im Kennzeichnungsteil des Anspruchs 1 angegebenen Merkmale erreicht.

Der am vorderen im Bohrloch befindlichen Ende des Bolzen angeordnete Energiespeicher stützt sich an der den Verankerungsbereich bildenden ausgehärteten Verbundmasse ab, so daß die über den Bolzen geleitenden dynamischen Belastungen über den Energiespeicher abgefangen werden. Die axiale Bewegungsmöglichkeit des Bolzen innerhalb des Verankerungsbereichs wird durch verbundshindernde Mittel erreicht, mit denen der Bolzen versehen ist. Über einen am vorderen Ende des Bolzens angeordneten, bzw. durch eine Mutter gebildeten Anschlag wird die Schwingungsenergie des Bolzens in den Energiespeicher übertragen. Durch die Energieübertragung preßt sich der beispielsweise zwischen zwei Stahlscheiben eingeschlossene Energiespeicher, der aus einem Elastomer oder Metallschaum bestehen kann, an die Bohrlochwandung an und sichert, daß die Spannkraft des Befestigungselements konstant aufrechterhalten bleibt. Durch die Anbringung des Energiespeichers am vorderen, im Bohrloch befindlichen Ende des Bolzens wird zur Befestigung eines Gegenstandes nur der auf die Klemmdicke des Befestigungsgegenstandes abgestimmte Überstand des Bolzens benötigt. Damit ist mit dem erfindungsgemäßen Befestigungselement eine platzsparende, dynamische Lasten aufnehmende Befestigung möglich.

Es hat sich gezeigt, daß der Einsatz von geschäumten Materialien, beispielsweise Aluminiumschaum, besonders geeignet ist, um Schockenergie zu vernichten. Da das Elastizitätsmodul von geschäumten Metallen über die Dichte in einem weiteren Bereich variiert werden kann, ergibt sich die Möglichkeit die Energieabsorbierung des Energiespeichers so zu beeinflussen, daß die Elastizität des Befestigungselements auf die zu erwartende Schnellbelastung eingestellt werden kann.

Zum Verankern wird das Befestigungselement ins Bohrloch eingeführt. Der Längsspalt zwischen dem Bolzen und der Bohrlochwandung wird mit einer aushärtenden Mörtelmasse gefüllt. Nach dem Aushärten der Mörtelmasse entsteht ein fester, im Bohrloch verankerter Mörtelkern, der den Bolzen umschließt und als Abstützung für den Energiespeicher wirkt.

Als verbundhindernde Mittel können Beschichtungen, beispielsweise in Form eines Lackes eingesetzt werden. Bei der Verwendung eines Lackes als Beschichtung kann diesem radikalisch aushärtenden Reaktionsharzsystem, z.B. t-Butylcatechol oder Phenolharzlack beigesetzt sein. Es ist auch möglich, eine aus einem Metall bestehende Beschichtung, z. B. eine galvanische Beschichtung aufzubringen. Der Bolzen kann mit einem Trennmittel wie Kunststoffolie oder ähnlichem, das gewisse Gleiteigenschaften aufweist und auf der Basis von Polysiloxan, Polyolefin, Polytetrafluoräthylen, Polypropylen und ähnlichem besteht, versehen sein. Möglich sind auch Gleitmittel wie Graphit, Zinksulfid, Molybdänsulfid, Metallseifen und Wachse.

Die Verbindung zwischen dem Bolzen und dem Energiespeicher kann variabel gestaltet sein, beispielsweise kann der Energiespeicher auf dem Bolzen aufgeschraubt, oder der Bolzen mit den geschäumten Metallen umspritzt sein. Der Energiespeicher kann auch mit dem Bolzen verklebt oder durch eine Unterlegscheibe und Mutter festgehalten sein.

Die Erfindung wird nachfolgend anhand der Zeichnungen näher erläutert.

Es zeigen:
- Figur 1: das erfindungsgemäße Befestigungselement nach dem Enführen ins Bohrloch
- Figur 2: das in Figur 1 dargestellte Befestigungselement während der Befüllung des Längsspaltes
- Figur 3: das Befestigungslement nach Figur 1, vorgespannt
- Figur 4: das in Figur 1 dargestellte Befestigungselement mit einem abgewandelten Energiespeicher
- Figur 5: das in Figur 4 dargestellte Befestigungselement, vorgespannt
- Figur 6: das in Figur 1 dargestellte Befestigungselement mit einem weiteren abgewandelten Energiespeicher
- Figur 7: das in Figur 6 dargestellte Befestigungselement, vorgespannt.

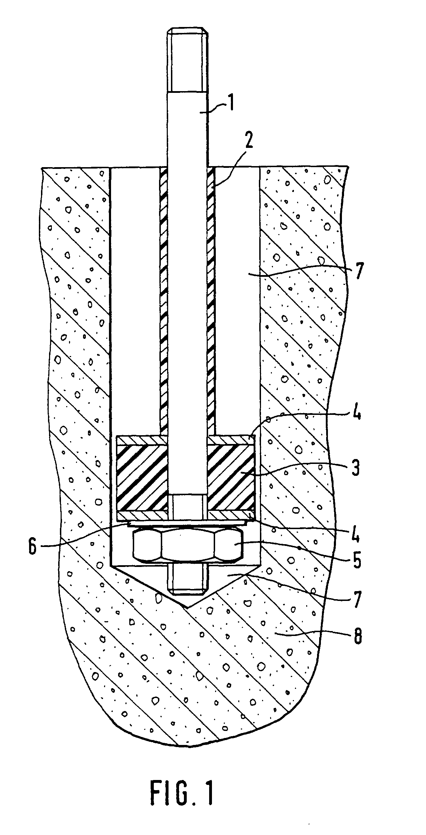

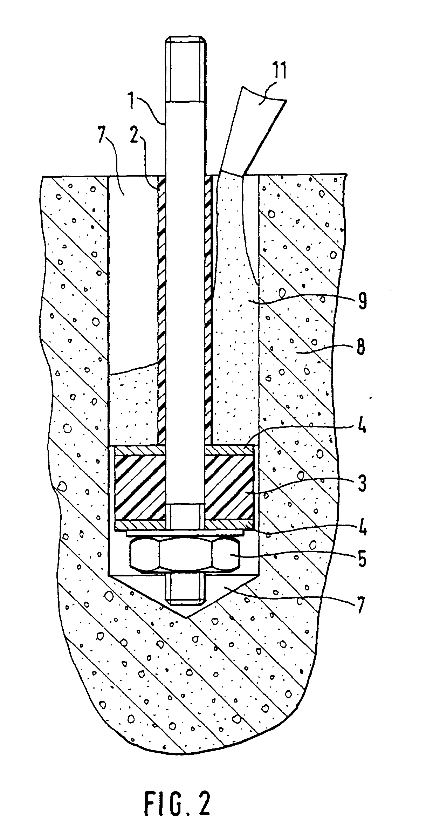

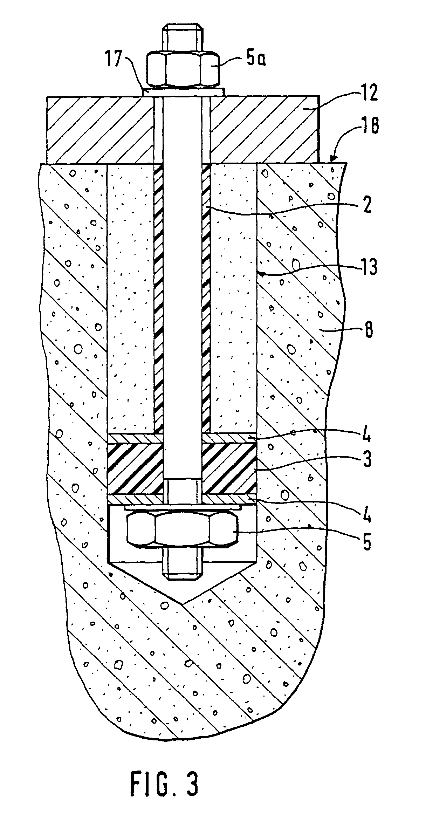

Das in Figur 1 dargestellte Befestigungselement besteht aus einem Bolzen 1 und einem Energiespeicher 3, der am vorderen im Bohrloch 7 befindlichen Ende des Bolzens 1 so angeordnet ist, daß er sich an der den Verankerungsbereich bildenden, ausgehärteten Verbundmasse abstützt. Die Außenfläche des Bolzens 1 ist mit einem verbundhindernden Mittel 2 versehen. Der Ringspalt zwischen dem Bolzen 1 und der Bohrlochwandung ist mit einer aushärtbaren Mörtelmasse befüllt. Der Energiespeicher 3 besteht aus einem Elastomer der zwischen zwei Stahlscheiben 4 angeordnet ist. Ferner ist am vorderen Ende des Bolzens 1 eine Mutter 5 angebracht, die als Anschlag dient und die Übertragung der Schwingungsenergie des Bolzens 1 in den Energiespeicher 3 ermöglicht. Die Befüllung des Ringspaltes erfolgt über eine Kanüle 11, wie die Figur 2 zeigt. Nach dem Aushärten der Mörtelmasse entsteht ein fester ringförmiger Mörtelkern 13, der den Bolzen 1, wie die Figur 3 zeigt, umschließt.

Der in Figur 3 dargestellte Befestigungsgrund 8 ist vorzugsweise ein homogener fester Baustoff wie Vollziegel, Kalksandstein oder Beton.

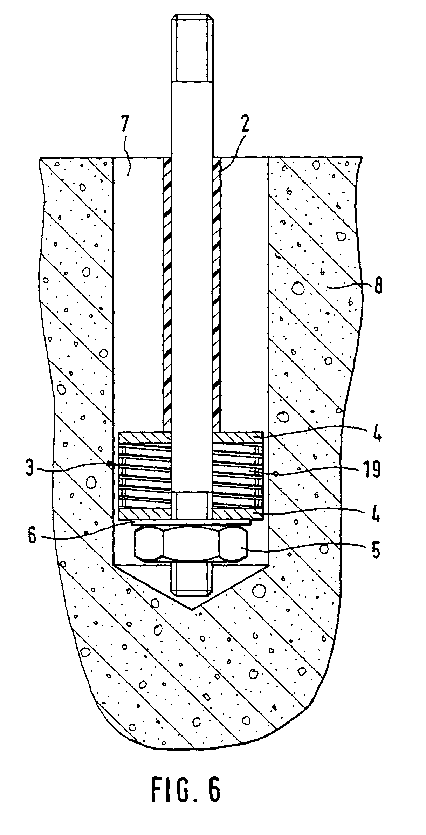

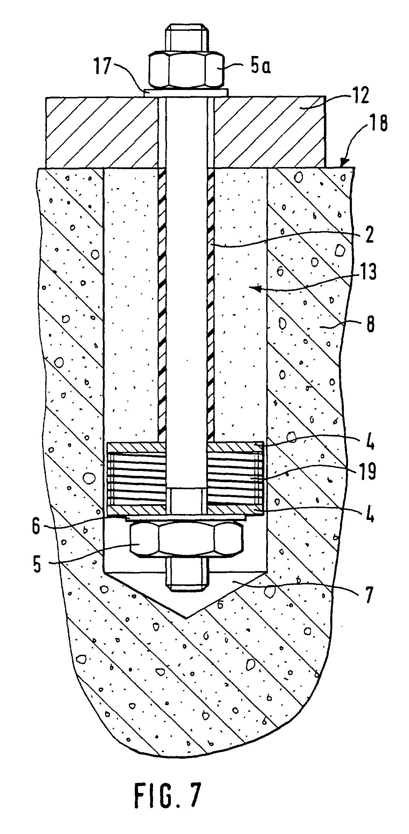

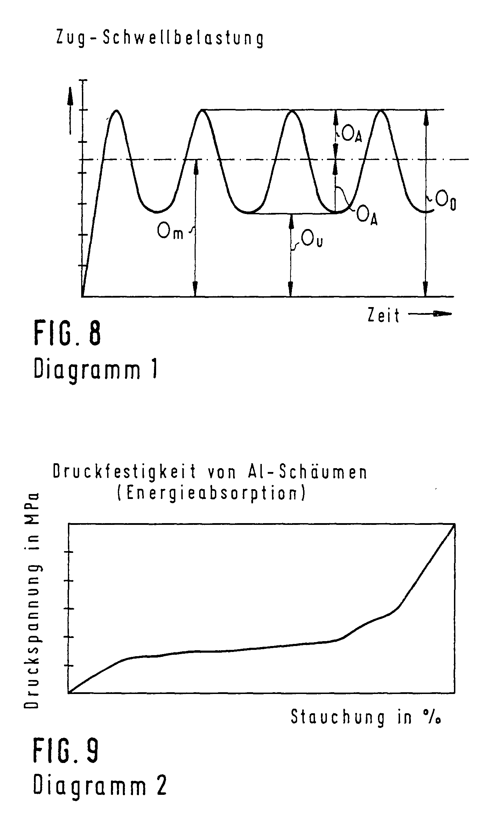

Das am Befestigungsgrund 8 zu befestigende Bauteil 12 wird mit Hilfe einer Muttter 5a und der Unterlegscheibe 17 gegen die in Figur 3 dargestellte Oberkante 18 des Befestigungselementes angedrückt.

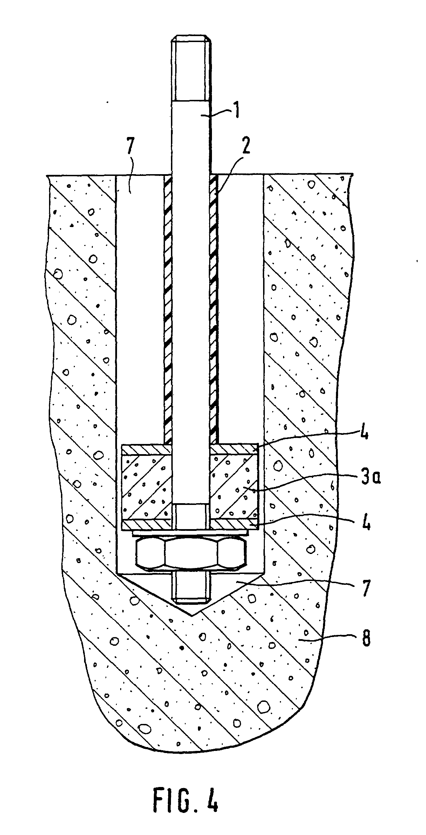

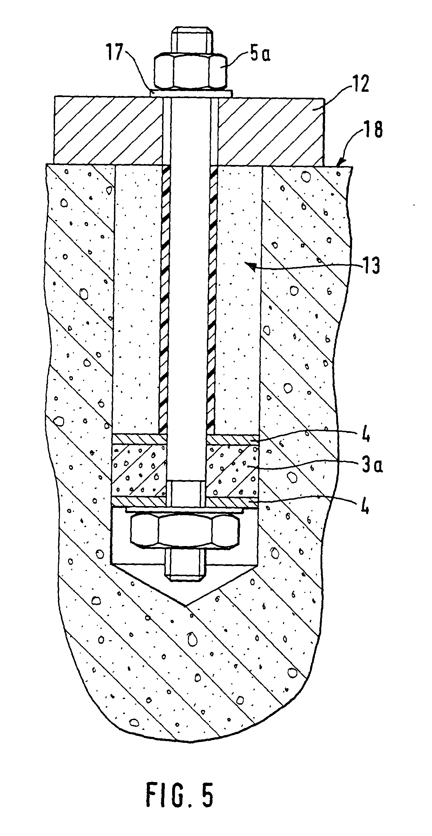

Die Figur 4 zeigt, ähnlich wie die Figur 1, ein erfindungsgemäßes Befestigungselement nach dem Einführen ins Bohrloch, wobei der Energiespeicher 3a aus einem metallischen Schaum besteht. Der Energiespeicher 3a ist zwischen zwei Stahlscheiben 4 angeordnet. Nach der Vorspannung des Befestigungselementes erfolgt ein Verdichten des Energiespeichers 3a. Dabei wird sich der Energiespeicher 3a an die Bohrlochwandung anpressen, wie die Figur 5 zeigt.
Eine weitere abgewandelte Form des Energiespeichers 3, die in der Figur 6 dargestellt ist, besteht aus einer Tellerfeder 19, die in einem zwischen zwei Stahlscheiben angeordneten Energiespeicher 3 aus einem Elastomer eingelassen ist. Nach dem Vorspannen des Befestigungselementes verformt sich die Feder in axiale Richtung, wie die Figur 7 darstellt.

Ein praktisches Beispiel für die nichtruhenden Belastungen, die sich auf das erfindungsgemäße Befestigungselement nach Figur 1, 3 auswirkt, ist im Diagramm 1 dargestellt.

Ein weiteres Beispiel für die nichtruhenden Belastungen , die sich auf das Befestigungselement nach Figur 4,5 auswirkt, ist im Diagramm 2 dargestellt.

## Patentansprüche

1. Befestigungselement für nichtruhende Belastungen, zum Befestigen von Maschinen, Fördereinrichtungen oder sonstigen Bauteilen, mit einem mittels einer aushärtbaren, den Verankerungsbereich bildenden Mörtelmasse (12) im Bohrloch (7) verankerten Bolzen (1), an dem ein Energiespeicher (3) angeordnet ist, **dadurch gekennzeichnet, daß** der Energiespeicher (3) am vorderen im Bohrloch befindlichen Ende des Bolzens (1) und sich am Verankerungsbereich (13) abstützend angeordnet ist, und daß der Bolzen (1) auf seiner Außenfläche auf der Länge des Verankerungsbereichs (13) mit einem verbundhindernden Mittel (2) versehen ist

2. Befestigungselement nach Anspruch. **dadurch gekennzeichnet, daß** der Energiespeicher (3) als Ringkörper ausgebildet und zwischen zwei Stahlscheiben (4) angeordnet ist.

3. Befestigungselement nach Anspruch 1, **dadurch gekennzeichnet, daß** der Energiespeicher (3) aus einem Elastomer hergestellt und zwischen zwei Stahlscheiben (4) angeordnet ist.

4. Befestigungselement nach Anspruch 1, **dadurch gekennzeichnet, daß** der Energiespeicher (3) aus einem metallischen Schaum hergestellt und zwischen zwei Stahlscheiben (4) angeordnet ist.

5. Befestigungselement nach Anspruch 3, **dadurch gekennzeichnet, daß** in dem aus einem Elastomer hergestellten Energiespeicher (3) eine Feder (16) eingelassen ist.

6. Befestigungselement nach Anspruch 3, **dadurch gekennzeichnet, daß** der Energiespeicher (3) aus Aluminiumschaum besteht.

7. Befestigungselement nach Anspruch 1, **dadurch gekennzeichnet, daß** das verbundhindernde Mittel (2) ein Gummischlauch ist.

8. Befestigungselement nach Anspruch 1, **dadurch gekennzeichnet, daß** das verbundhindernde Mittel (2) ein Beschichtungsmittel ist.

9. Befestigungselement nach Anspruch 7, **dadurch gekennzeichnet, daß** das Beschichtungsmittel ein Gleitlack, Wachs oder Epoxyacrylatharz ist.

## Claims

1. Fastening element for non-stationary loads, for the purpose of fastening machines, conveying devices or other building components, having a bolt (1) that is anchored in the drilled hole (7) by means of a hardenable mortar composition (12) that forms the anchoring region, on which bolt there is arranged an energy storage means (3), **characterized in that** the energy storage means (3) is arranged at the leading end of the bolt (1) in the drilled hole and is arranged to bear against the anchoring region (13), and the bolt (1) is provided with adhesion-preventing means (2) on its outer surface along the length of the anchoring region (13).

2. Fastening element according to claim 1, **characterized in that** the energy storage means (3) is in the form of an annular body and is arranged between two steel disks (4).

3. Fastening element according to claim 1, **characterized in that** the energy storage means (3) is made of an elastomer and is arranged between two steel disks (4).

4. Fastening element according to claim 1, **characterized in that** the energy storage means (3) is made of a metallic foam and is arranged between two steel disks (4).

5. Fastening element according to claim 3, **characterized in that** a spring (19) is embedded in the energy storage means (3) that is made of an elastomer.

6. Fastening element according to claim 3, **characterized in that** the energy storage means (3) consists of aluminium foam.

7. Fastening element according to claim 1, **characterized in that** the adhesion-preventing means (2) is a rubber tube.

8. Fastening element according to claim 1, **characterized in that** the adhesion-preventing means (2) is a coating agent.

9. Fastening element according to claim 7, **characterized in that** the coating agent is a low friction lacquer, wax or epoxy acrylate resin.

## Revendications

1. Élément de fixation pour charges dynamiques destiné à fixer des machines, des dispositifs de transport ou d'autres pièces de construction, comprenant un axe (1) pouvant être ancré dans le perçage (7) au moyen d'une masse de mortier (12) pouvant durcir et formant la zone d'ancrage, axe sur lequel est placé un accumulateur énergie (3), **caractérisé en ce que** l'accumulateur d'énergie (3) est disposé sur l'extrémité avant de l'axe (1) qui se trouve dans le perçage et qui prend appui dans la zone d'ancrage (13), et **en ce que** l'axe (1) comporte, sur sa surface extérieure, sur la longueur de la zone d'ancrage (13), un moyen empêchant l'adhérence (2).

2. Élément de fixation selon la revendication 1, **caractérisé en ce** l'accumulateur d'énergie (3) est réalisé en tant que corps annulaire et est disposé entre deux plaques d'acier (4).

3. Élément de fixation selon la revendication 1, **caractérisé en ce que** l'accumulateur d'énergie (3) est fabriqué en un élastomère et est disposé entre deux plaques d'acier (4).

4. Élément de fixation selon la revendication 1, **caractérisé en ce que** l'accumulateur d'énergie (3) est fabriqué en une mousse métallique et est disposé entre deux plaques d'acier (4).

5. Élément de fixation selon la revendication 3, **caractérisé en ce qu'**un ressort (19) est logé dans l'accumulateur d'énergie (3) en élastomère.

6. Élément de fixation selon la revendication 3, **caractérisé en ce que** l'accumulateur d'énergie (3) est composé de mousse d'aluminium.

7. Elément de fixation selon la revendication 1, **caractérisé en ce que** le moyen (2) empêchant l'adhérence est un tuyau en caoutchouc.

8. Élément de fixation selon la revendication 1, **caractérisé en ce que** le moyen (2) empêchant l'adhérence est un revêtement.

9. Élément de fixation selon la revendication 7, **caractérisé en ce que** le revêtement est une laque lubrifiante, de la cire ou une résine acrylique époxyde.
